# EUROPEAN PATENT APPLICATION

(11) **EP 0 618 539 A1**
(43) Date of publication of application: **05.10.1994**
(21) Application number: 93919683.8
(22) Date of filing: 20.09.1993
(51) Int. Cl.: G06F 15/21, H04N 7/173, H04M 11/00

(54) **METHOD FOR PROVIDING SERVICE ON CREDIT UTILIZING TELEPHONE LINES**

(30) Priority: 18.09.1992 JP 273523/92
(71) Applicant: KIM, Soon Ik, Tokyo 166 (JP); LEE, Byung Ke, Funabashi-shi, Chiba 273 (JP); Ohno, Toshio, Tokyo 156 (JP)
(72) Inventor: OHNO, Toshio, Mot Corporation, Tokyo 156 (JP)
(74) Representative: Bubb, Antony John Allen
(86) International application number: JP9301341
(87) International publication number: WO9407205

(57) **Abstract**

An information providing device (2) connected to telephone lines, on receiving a call from a user's terminal (1), sends out a guidance to the terminal, prompts the user to input the card number and password number. After the input of the numbers by the user, the device transfers the numbers to the host computer (3) which manages the information utilization fees. The host computer checks the user conditions including the identification of the user for each number. If the conditions are satisfied the host computer transfers the card number and others to a card credit company (5) to make the credit reference and other confirmations of the user. When receiving the result of the credit reference and the other confirmations from the card credit company, the host computer transmits it to the information providing device. If the result of the credit reference is normal, the information providing device begins providing the information service as selected by the user through the user's terminal. After the service the terminal transmits the utilization date to the host computer and the card credit company.

## Description

### TECHNICAL FIELD

The present invention relates generally to a service providing system on credit, of which a credit card holder can make use via a telephone circuit.

More particularly, this invention relates to a service providing system according to which, when various information is provided to a credit card holder for pay via a telephone circuit, the credit card holder can make payment on credit, and a service providing system according to which a credit card holder can order the item she or he wishes to purchase via a telephone circuit, and can make payment on credit.

### BACKGROUND TECHNIQUE

In recent years, a certain telephone service system that allows the user to gain access to specific information via a public telephone network, e.g., Dial Q², has enjoyed an increased popularity, and has been expected to open a new yet promising business market. However, this system has become a grave social problem, partly because the information it can provide is mainly oriented to entertainment and leisure, and partly because it is likely to be used by unqualified people and abused by insolvent youth. In addition, the mechanism of Dial Q² service has had its own limitations, because the service area is limited, some public telephone sets cannot be applied to the system, and so on. Moreover, various problems have arouse in connection with the collection of service charges by public communications corporations.

Also, much use has recently been made of a mail-order system which enables the user to order various items via a telephone circuit and to make payment on credit by delivering cash or transferring given formats to the mail-order firm after the user has obtained the item. To give an order to a mail-order firm for the desired item and, at the same time, to make payment by transmitting the credit card code thereto by way of a telephone may be achieved by manually operating the terminals for cross-reference.

As mentioned just above, conventional information providing service systems have had various problems; they are likely to be used by unqualified persons, much more information than would be reasonable may possibly be provided because the collection of the service charges is carried out by public communication corporations that collect the charges for telephone calls.

Mail-order systems making use of a telephone circuit have the following problems. When payment is made on credit, awkward exchanges of papers are needed for checking whether or not conditions for settlement of accounts on credit are satisfied. In addition, the terminal device must be manually operated for inquiries.

In view of the situations mentioned above, it is an object to achieve a system for providing service which enables any credit card holder to use every telephone from general, public, automotive and mobile telephones to facsimiles and modes or every terminal connectable to a telephone circuit (including terminals that are accessible by a radiotelephone) to gain access thereto, thereby obtaining the desired service information about English conversation, seeking employment, and marriage, legal, taxation business and management counseling. This system also enables the service charge to be settled on a credit card. In addition, improper use or abuse of the system can be ruled out.

With conventional mail-order systems it is possible to give an order for the desired item via a telephone circuit. However, a problem with those systems is that when a card company cannot make payment on a credit card immediately at a user's request. Thus, it is another object of the invention to provide a service providing system which enables a credit card holder to give an order for the desired item via a terminal connected to a telephone circuit and, at the same time, ask a card company to make payment on credit.

### DISCLOSURE OF THE INVENTION

According to one aspect of the invention, an information providing unit that a credit card holder can access through a terminal device such as a telephone. Upon receipt of a signal from the terminal, the information providing unit sends out guidance, receives the user's card and secret codes, and transfers them to a host computer that manages service charges. The host computer checks up service conditions including the verification of the user for each code. When the conditions are satisfied, the host computer transfers the card code, etc., to a card company for the purpose of credit and other inquiries. Upon receipt of the results of the credit inquiry, the host computer transmits them to the information providing unit. When the results of the credit inquiry have no fault, the information providing unit starts providing service information to the user terminal. After the completion of the provision of the information, the information providing unit transmits service data to the host computer and card company.

According to another aspect of the invention, a credit card holder gains from a terminal device such as a telephone access to an automatic order-receiving unit for male-order sale. Then, the order-receiving unit sends out guidance, according to which the necessary member number is entered into the order-receiving unit. Then, the order-receiving unit checks up that number. When there is no fault, the order-receiving unit instructs the subscriber to enter data about the desired item from the terminal thereinto. The information received by the order-receiving unit is transmitted to a host computer. Upon receipt of the card and secret codes from the user terminal, the host computer checks up those codes. When there is no fault, the host computer transmits such data to the database of a card company for the purpose of a credit inquiry. Upon receipt of the results of the credit inquiry, the order-receiving unit messages them to the user terminal. When those results have no fault, sales records on credit card are made, and then transmitted to the database of the card company.

### BRIEF DESCRIPTION OF THE DRAWINGS

FIG. 1 is a schematic of the first basic embodiment of the invention,
FIG. 2 is a schematic of the second basic embodiment of the invention,
FIG. 3 is a schematic of the third basic embodiment of the invention,
FIG. 4 is a control operation flowchart of Example 1,
FIGS. 5 and 6 are control operation flowcharts 1 and 2 of Example 2, and
FIGS. 7 and 8 are control operation flowcharts 1 and 2 of Example 3.

### BEST MODE FOR CARRYING OUT THE INVENTION

Some embodiments of the invention for achieving the objects mentioned above will now be set out with reference to the accompanying drawings.

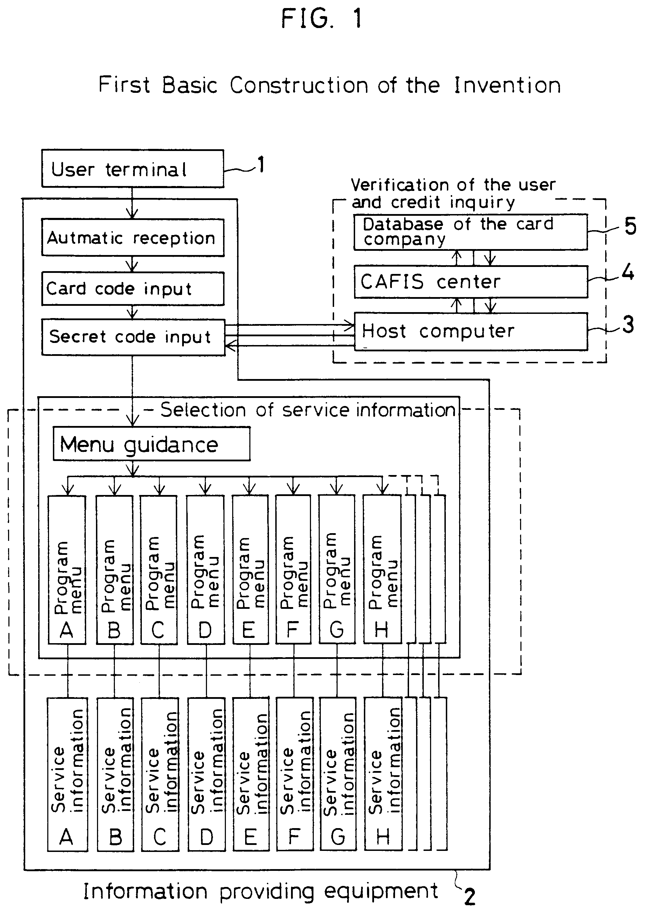

FIG. 1 shows the first basic embodiment of the invention. In FIG. 1, reference numeral 1 stands for a user terminal (e.g., a telephone) incorporated in a public data network (a telephone network); 2 an information providing unit positioned under an information provider and having the functions of providing service information called for by a user via a public data (telephone) network and receiving the credit card and secret codes of the user to transfer them to a host computer; 3 a host computer installed by a company that manages service fees, which stores information about the user, addresses a credit inquiry to a card company, and is connected to the information providing unit 2 by way of a telephone circuit; 4 a credit and finance information system (hereinafter CAFIS for short) having the functions of interfacing credit inquiries addressed to the database of each credit card company to the protocol of its own, etc.; and 5 a database installed by each credit card company (hereinafter called the card company), in which various data about each user (card) such as frequency, usable limit and credit standing are stored.

For the information providing unit 2 an easily extensible personal computer may be used. The CAFIS center 4 for the credit inquiry is a mechanism for interceding communications between the database 5 of the card company and the host computer 3. It is noted that FIG. 1 also shows schematically the processing procedure of the control program of a computer built in the information providing unit 2.

Referring to FIG. 1, a number of credit card holders can use the user terminal 1 to access the information providing unit 2. The information providing unit 2 is connected to the host computer 3 either via a circuit (e.g., a private or public circuit, or a packet communication network) or via a cable that is directly connected thereto. Similar connections are made between the host computer 3 and the CAFIS center 4 and between the CAFIS center 4 and the database 5 of the card company either via a circuit (the same as mentioned above) or a cable that is directly connected thereto). The CAFIS center 4 is not always needed; the host computer 3 may be connected to the database of each card company via a circuit.

In the first basic embodiment of the present system for providing service information using a telephone circuit, shown in FIG. 1, the control program of the computer built in the information providing unit 2 does operation in the following procedure upon a telephone call connected from the user terminal 1 to the information providing unit 2 via a public circuit.

Basically, the embodiment shown in FIG. 1 operates as follows. With the user terminal 1 connected to the information providing unit 2, the unit sends out guidance (that requires the user to enter thereinto the credit card and secret codes) to the user, according to which the user enters the credit card and secret codes into the unit. Then, the unit 2 transfers this input signal to the host computer 3 via the public circuit (or a private line) and, at the same time, sends out menu guidance about serviceable information to the user for a given time.

On the other hand, as the host computer 3 receives the signal from the information providing unit 2, it reads the card information of the user out of the memory in which service information is stored according to the built-in control program to verify the user and check up conditions about limits imposed on service charges, etc. If there is no fault, the information about the user is fed either directly or via the CAFIS center 4 to the database 5 of the card company for the purpose of credit and other inquiries. Then, when credit can be granted or when there is no fault, the signal to that effect is fed to the information providing unit through the host computer 3, so that the provision of service information selected by the user from the menu can be allowed.

Consequently, it is possible to provide serviceable information smoothly to the user without any substantial time lag, because the menu guidance for serviceable information is available as soon as the user enters the credit card and secret codes into the information providing unit, and because the user and card can be verified and checked up while making use of the time during which the user receives the menu guidance. After the completion of the provision of the program, service data (about the service time, etc.) - on the basis of which the service charge is paid on credit - are calculated by the service information providing unit 2, and are then recorded in the host computer 3. Upon requested by the card company, these data are sent from the host computer 3 to the database 5 of the card company for the purpose of settlement of accounts on credit. Those data are recorded on a magnetic tape, etc., and will later be offered to the card company for the purpose of settlement of accounts on credit.

The operation of the embodiment shown FIG. 1 may be modified as follows.

The credit card and secret codes are described as being entered into the system when the system receives a signal. At this time, however, the effective term of the card and so on may be entered into the system. In the above embodiment, the system is designed to send out the menu guidance after the user has inputted the codes thereinto. When the information (program) provided is only one, however, the system may furnish the user with music or CM, or no sound may be provided to the user. According to the operation of the embodiment mentioned above, the verification of the user is carried out by reading the card information of the user out of the memory of the host computer 3. However, the verification of the user (by checking up the credit card and secret codes) may also be carried out by the database 5 of the card company. It is here noted that the database 5 of the card company enables more accurate checking to be carried out on the basis of the latest data, and enables the management of secret codes to be done only by the card company.

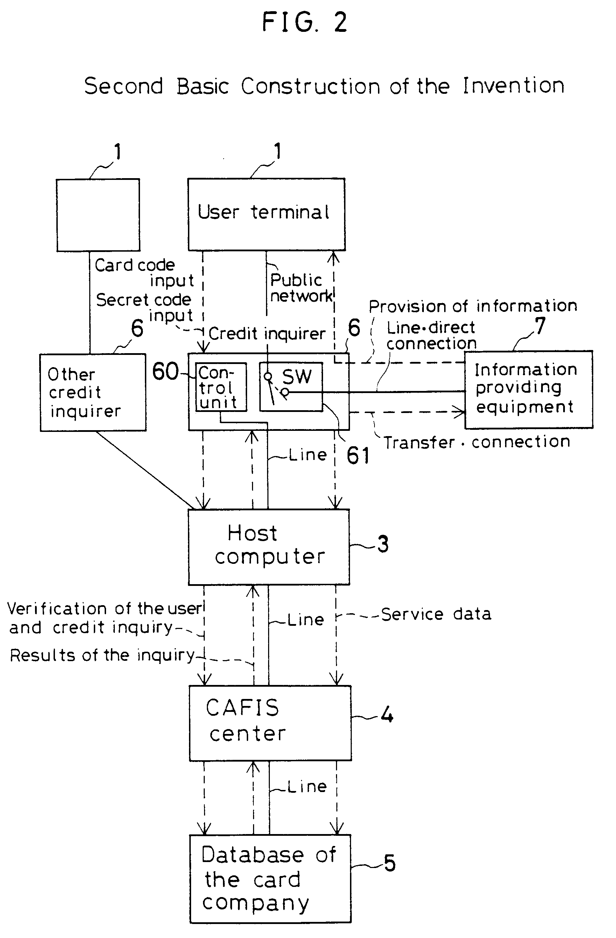

Then, the second basic embodiment of the invention will now be explained with reference to FIG. 2. In the system shown in FIG. 2, a credit inquirer unit 6 which differs in function from the information providing unit 2 explained with reference to FIG. 1 is used in place thereof. This credit inquirer unit 6 is connected to an information providing unit 7 either directly or via a line and to a host computer 3 via a line. The credit inquirer unit 6 is provided with a control unit 60 and a switch SW·61 that forms part of a mechanism controlled by the control unit and designed to connect or disconnect a user terminal 1 to or from the information providing unit 7. A function similar to that of this switch SW may also be achieved by use of a mechanism that is connected to the circuit for the user terminal 1 in response to the information providing unit 7 called via a public circuit or extension (when the information providing unit 7 is incorporated in the PBX). Other numeral references 1, 3, 4 and 5 in FIG. 2 stand for like parts shown by like numeral references in FIG. 1, and so will not be explained. As is the case with the system shown in FIG. 1, the credit inquirer unit 6 is connected to the host computer 3, and the host computer 3 is connected via a circuit to a plurality of credit inquirer units 6 (including information providing units 7) located in various districts to execute the transmission/reception, and processing, of data for each credit inquirer unit 6.

Now the second basic embodiment of the invention shown in FIG. 2 will be explained. With a signal transmitted from the user terminal 1 to the credit inquirer unit 6, guidance is sent out with credit card and secret codes and other data (e.g., the effective term of the card), as in the system shown in FIG. 1. At this time, the switch SW of the credit inquirer unit 6 is switched over to the host computer 3 by the built-in control unit, so that the input codes can be transferred to the host computer 3. In the meantime, some music or CM may be presented to the user, or the user may be shielded from any sound.

Following this, the host computer 3 checks the received codes to verify the user and inspect conditions about limits imposed on service charges, as in the system shown in FIG. 1. If there is no fault, the data about the user are allowed access either directly or via the CAFIS center 4 to the credit card database 5 for the purpose of credit and other inquiries. Here it is noted that it is not always required to use the computer 3 for verifying the user (by use of the secret code) and inspecting conditions about limits imposed on service charges, etc.; these codes may be fed to the database 5 of the card company where they may be checked up.

When credit can be granted or when the user is so verified that credit can be granted to the user, that is, when there is no fault, the signal to that effect is fed to the credit inquirer unit 6 via the host computer 3. As this is received by the credit inquirer unit 6, the control unit connects the switch SW to the information providing unit 7, or calls the information providing unit 7 through a public circuit or extension. As the information providing unit responds to the call, the controller operates to connect the line of the user terminal 1 to the line of the information providing unit 7.

The information providing unit 7 sends out menu guidance and, upon receipt of a signal about information selected by the user, operates to send out the selected information (program). Here it is understood that when the program to be provided is one, the information can immediately be fed to the user without any menu guidance.

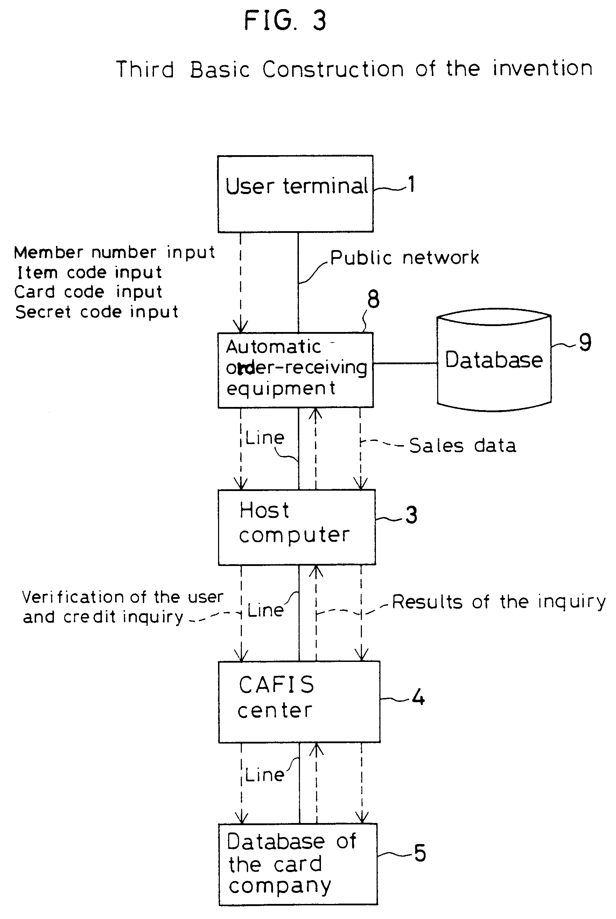

FIG. 3 is a basic schematic of the third embodiment of the invention. There is provided automatic order-receiving unit 8 that is connected to a user terminal 1 via a public network, and there is provided a database 9 for storing various data about orders, etc. This automatic order-receiving unit 8 executes the receiving of orders and addresses a credit inquiry to a card company. In FIG. 3, other reference numerals 1, 3, 4 and 5 stand for like units shown by like reference numerals in FIG. 1, and so explanations thereof are omitted. As in the case of the embodiments shown in FIGS. 1 and 2, the automatic order-receiving unit 8 is connected either via a line or directly to the host computer.

The third embodiment of the invention shown in FIG. 3 operates as follows. The user terminal 1 is operated to gain access to the automatic order-receiving unit 8 to give an order by use of a dial. Then, the automatic order-receiving unit 8 sends out guidance, as is the case with the information providing unit shown in FIG. 1. When the system is run as the membership system, the numbers, addresses and names of the members are previously registered in the order-receiving unit 8. On request, the member uses the user terminal 1 to enter the member number into the unit 8. Upon receipt of the member number, the database 9 checks up it with reference to the data about the member numbers. If it is true, a message (guidance) is sent out to the subscriber. Then, the subscriber sends out the particulars (e.g., code and amount) of the item the subscriber wants to purchase along with the card, secret and other codes.

When the system is not the membership system, the user is first asked to enter the address, name and so on into the order-receiving unit 8 by a voice for recording. Then, the user is asked to use the user terminal 1 to enter into the unit 8 the particulars (e.g., code and amount) of the item the user wants to purchase.

Upon receipt of the information about the item, whether the system is the membership system or not, the automatic order-receiving unit 8 transfers it to the host computer 3 together with the particulars (e.g., price) of the item. Upon receipt of these, the host computer 3 checks up the usable maximum, the number, etc. If there is no fault, the card, secret and other codes are transmitted either directly or via CAFIS 4 to the database 5 of the card company for the purpose of a credit inquiry as to whether or not the item can be sold on credit. Then, the results of this inquiry are transmitted to the host computer 3.

Upon receipt of the results of the credit inquiry, the host computer 3 transmit them to the automatic order-receiving unit 8, which in turn transmits them to the user terminal 1. When there is no fault in the results of the credit inquiry, that is, when the item can be sold by credit, the automatic order-receiving unit 8 records data about sales on credit (including the card, secret and other codes), and then transmits them to the computer 3 where they are stored. In addition, the credit loan is transmitted to the database 5 of the card company together with the card, secret and other codes. It is noted that the data about sales on credit are also transmitted to a goods delivery center where they are used to deliver the item to the user.

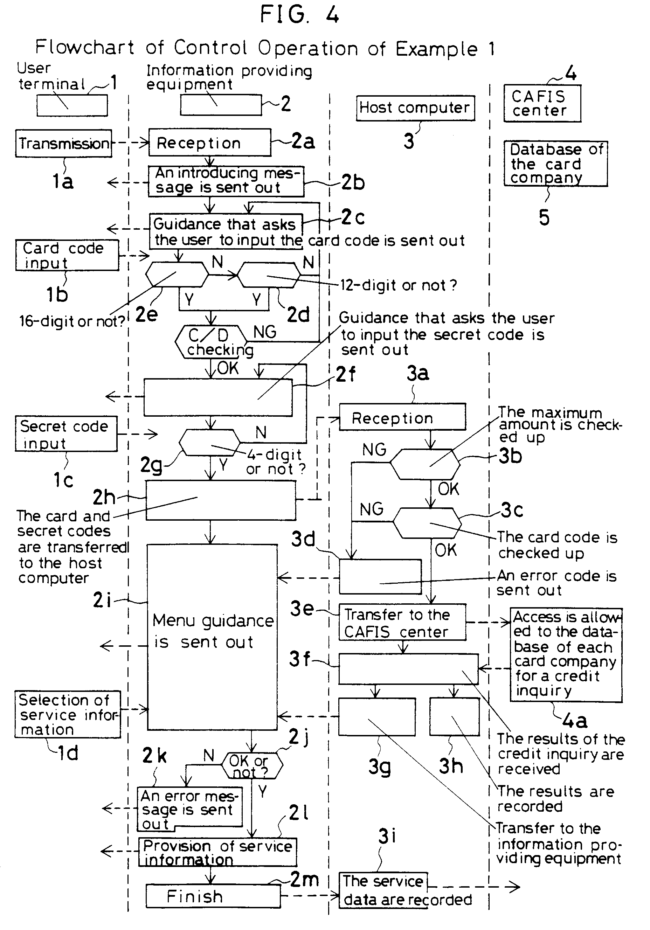

The invention will now be explained more specifically with reference to FIG. 4 that is a flowchart of the control operation of Example 1 of the invention. This control operation is executed by the first basic embodiment of the invention shown in FIG. 1.

In FIG. 4, 1 to 5 represent the same units as shown by the same numerals in FIG. 1. FIG. 4 is a flowchart of the user terminal 1, the host computer 3, communications between the CAFIS center 4 and the database 5 of the card company, and the control program of each computer. As illustrated, the use can use every terminal from general, public automotive and mobile phones to facsimiles and modems to access the system via a public circuit (FIG. 4-1a). Upon receipt of a phone call (FIG. 4-2a), the information providing unit 2 sends out an introduction message (FIG. 4-2b), and subsequently gives out guidance asking the user to enter the card code into the unit 2 by a voice or facsimile (FIG. 4-2c).

Then, the user keyboards or otherwise operates the user terminal 1 according to the guidance to enter the credit card code in the system by using the resulting DTMF (dual tone multi-frequency) signals (FIG. 4-1b). When the user terminal 1 is a personal computer, it is possible to convert the card code into data signals by a modem and transmit them on the circuit to the information providing unit 2. When the user terminal 1 includes an additional card reader, it is possible to convert signals from the card reader into data signal for transmission.

This code is received by a voice recognizing device (in the case of voice input) or dial signal receiver for identification. The data signals are identified by an receiver through a modem. Upon receipt of the credit card code, the computer in the information providing unit 2 executes identification of whether or not the number of figures of the card code is correct, C/D checking, and so on. It is noted that C/D represents a check digit included in a credit card code. In the case of a (16-digit) international card, the 16th digit may be selected from figures at the 1st to 15th digits by a specific computing method for checking.

Once the results of operation for C/D checking have been in agreement with the check digit, guidance that asks the user to enter the secret code in the system is sent out (FIG. 4-2f). Upon receipt of the secret code of the user from the user terminal 1, whether or not the number of figures of the secret code is correct is identified (FIG. 4-2g). If it is correct, the input signal for these card and secret codes is transferred to the host computer 3 (FIG. 4-2h) and, at the same time, menu guidance for serviceable information is sent out to the user terminal 1 for a given time (FIG. 4-2i).

Upon receipt of the signal from the information providing unit 2 (FIG. 4-3a), on the other hand, the host computer 3 reads the information in the card of the user out of the memory (built in the host computer 3), thereby checking whether or not the maximum amount the user can use for serviceable information per month, e.g., 100,000 yen is exceeded (FIG. 4-3b), and making identification of whether or not the card code is true by use of the secret code (FIG. 4-3c). At this time, if the card is found to have some fault, an error code is sent out to the information providing unit 2 (FIG. 4-3d). If there is no fault, the data about the user are transmitted to the database 5 of the card company via the CAFIS center 4 for the purpose of credit and other inquiries.

Then, the CAFIS center 4 addresses the credit inquiry to the database 5 corresponding to each credit card company (FIG. 4-4a). As a result, it is found that there is no fault (payment on credit is possible), or there is some fault (payment on credit is impossible). In either case, the results of the credit inquiry are sent to the host computer 3. Upon receipt of such results (FIG. 4-3f), the host computer 3 records them (FIG. 4-3g), and then transfers them to the information providing unit 2 (FIG. 4-3h).

It is noted that the verification of the user by the card and secret codes (FIG. 4-3c) may also be achieved by use of the database 5 of the card company, i.e., without recourse to the host computer 3.

Upon receipt of the results of the credit inquiry, the information providing unit 2 forms a judgment about whether or not sales on credit are possible (OK) (FIG. 4-2j). If OK, the information providing unit 2 starts providing the information the user selects (FIG. 4-2l) by entering an information selecting command therein (FIG. 4-1d), while the menu guidance is being sent out. If not OK, the information providing unit 2 gives out an error message (FIG. 4-2k).

According to the invention, the serviceable information to be provided includes information about mail order, ticket selling and hotel reservation, to say nothing of information about English conversation, seeking employment, and marriage, legal, taxation business and management counseling. The information may be provided by voices, facsimiles or personal computer networks. In the case of legal counseling for instance, the user may contact a pre-registered lawyer via a telephone circuit for bi-directional counseling, if desired.

After the provision of service information has been completed (FIG. 4-2m), service data that become a basis for settlement of accounts on credit are recorded in the host computer 3 and the database 5 of the card company (FIG. 4-3i).

It is noted that the maximum amount of the service charge the user can use may be fixed not only monthly but in other various units as well. For instance, a service charge per once may be fixed at 20,000 yen. If this amount should be exceeded, providing information is to be stopped.

In the first embodiment of the invention, while the data about the user is transmitted to the database 5 of the card company via the CAFIS center 4, it is understood that such data are transmitted directly, or not via the CAFIS center 4, to the database 5 of the card company.

Moreover, the information providing unit 2 may be made integral with the host computer 3. The system may also be modified such that the information providing unit 2 communicates directly with the card company, so that the verification of the user and the credit inquiry can be done by the database 5 of the card company.

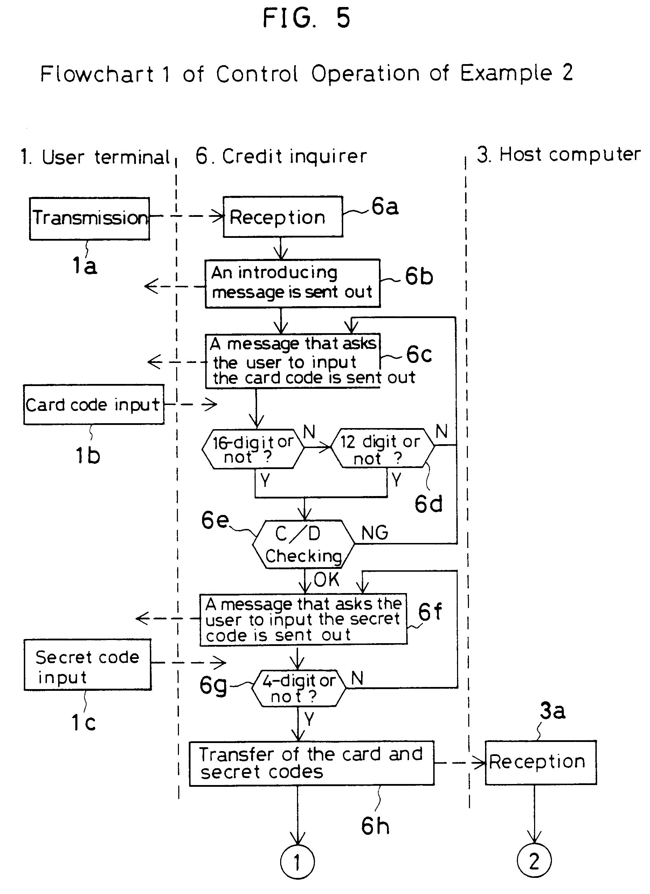

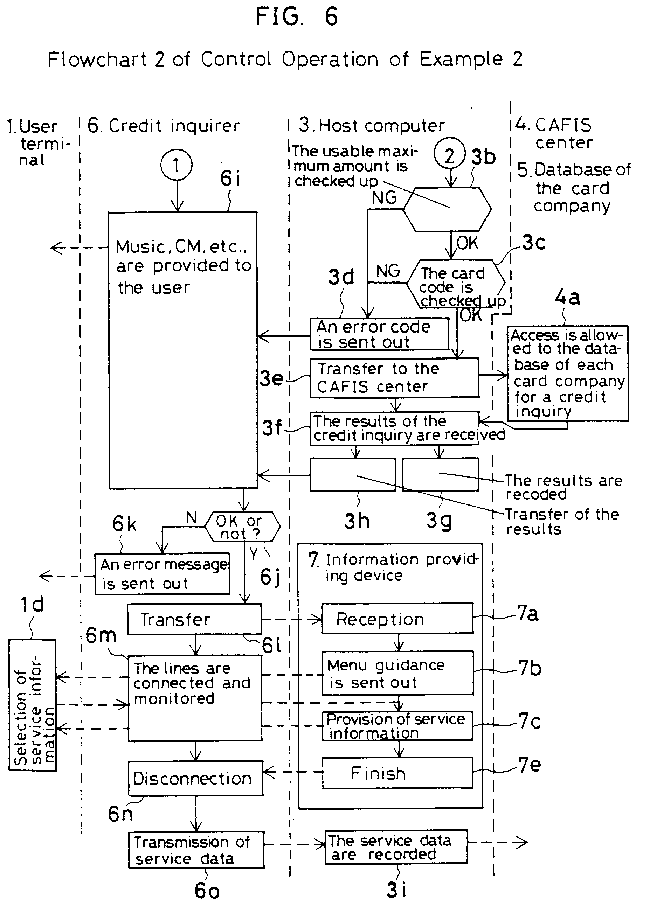

FIGS. 5 and 6 are control operation flowcharts 1 and 2 of Example 2 of the invention, respectively. This example 2 corresponds to the second basic embodiment of the invention shown in FIG. 2.

First, the number of the credit inquirer 6 is dialed at the user terminal 1 (FIG. 5-1a) to the credit inquirer 6 (FIG. 5-6a), so that the credit inquirer 6 can send out an introducing message (that is the same as guidance) (FIG. 5-6b) and a message (that is the same as in FIG. 4-2c) which asks the user to enter the card code into the system (FIG. 5-6c). In response to this, the user enters the card code into the system through the user terminal 1 (FIG. 6-1b), so that, as in FIG. 4, the credit inquirer can receive the card code carried by a DTMF signal.

As explained with reference to FIG. 4, the number of figures and so on of this code are checked up (FIGS. 5-6d and 5-6e). If there is no fault, a message that asks the user to input the secret code into the system is sent out (FIG. 5-6f). Then, the number of figures of the secret code inputted from the user terminal 1 (FIG. 5-1c) is checked up (FIG. 5-6g). If the secret code is confirmed to be a four-digit number, the card and secret codes are transferred to (FIG. 5-6h), and received by (FIG. 5-3a), the host computer 3.

While the card code is being transferred to the host computer 3, the credit inquirer 6 gives out music, CM, or the like to the user terminal 1 by way of diversion (FIG. 6-6i).

Upon receipt of the transferred card code, etc., on the other hand, the host computer 3 checks up the maximum amount the said user can use - which is stored in the memory (FIG. 6-3b), and checks up the card code (the verification of the user) (FIG. 6-3c). If there is some fault, that is, if the maximum amount is exceeded or the user is an impostor, the host computer 3 sends out an error code (FIG. 6-3d). If there is no fault, the host computer 3 accesses the database 5 of each card company via the CAFIS center 4, so that the card and secret codes can be transferred to the database 5 for the purpose of a credit inquiry (FIG. 6-4a).

Upon receipt of the results of this inquiry (FIG. 6-3f), the host computer 3 records them (FIG. 6-3g), and then transfers them to the credit inquirer 6 (FIG. 6-3h), where they are checked up (FIG. 6-6j). If they are found to be faulty, the host computer 3 sends an error message to the user (FIG. 6-6k). If there is no fault, the host computer 3 accesses the information providing unit 7 (via a circuit), then makes connection between the user terminal 1 and the information providing unit 7 (FIG. 6-6l), and subsequently monitors how the circuit works (the initiation and completion of the provision of service information (FIG. 6-6m).

Upon connected to the user terminal 1, the information providing unit 7 sends out the menu guidance (FIG. 6-7b), and as the user selects the desired information by use of the user terminal 1 (FIG. 6-1d), the information providing unit 7 starts providing the information (FIG. 6-7c). After the provision of this information has been completed (FIG. 6-7d), the credit inquirer 6 that monitors the circuit disconnects the user terminal 1 from the information providing unit 7 (FIG. 6-6n), and then transmits service data including the service time and the card code of the user to the host computer 3 and the database 5 of the card company (FIG. 6-6o) for recording (FIG. 6-3j).

As in the case of the information providing unit used with Example 1, the information providing unit 7 used with Example 2 can provide to the user various information about English conversation, seeking employment, etc., by means of voices, facsimiles, personal computers, etc. If required, the required data can be automatically transferred via a telephone circuit to a pre-registered expert for bi-directional counseling.

Here, too, the host computer 3 may be connected directly, or not by way of the CAFIS center 4, to the database 5 of the card company. While the verification of the user is done by the host computer 3, it is understood that this may be done by the database 5 of the card company. This may be achieved by the provision of an additional function (a line and communication control mechanism) of making communications between the credit inquirer 6 and the card company.

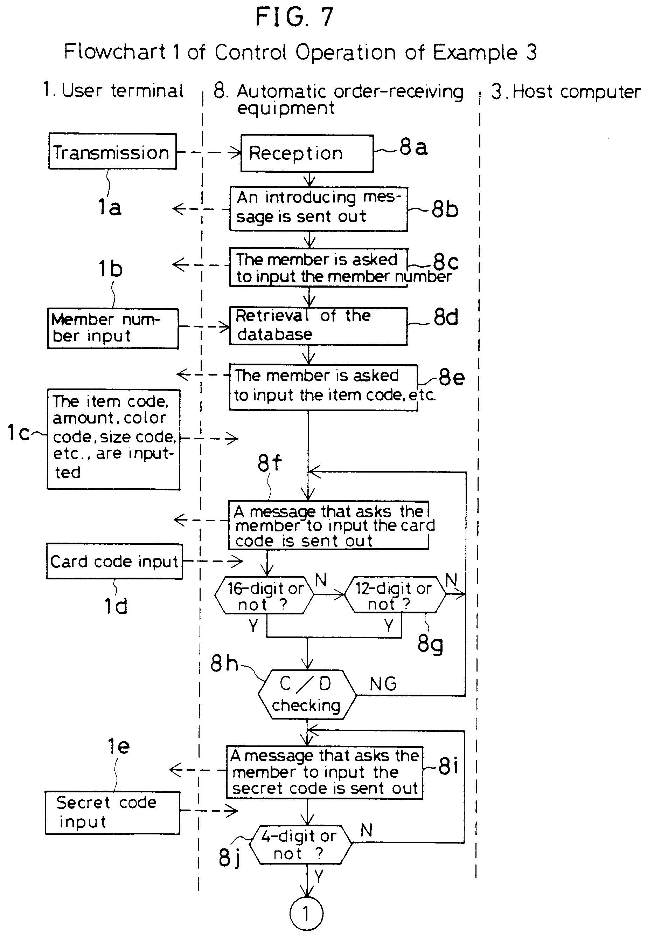

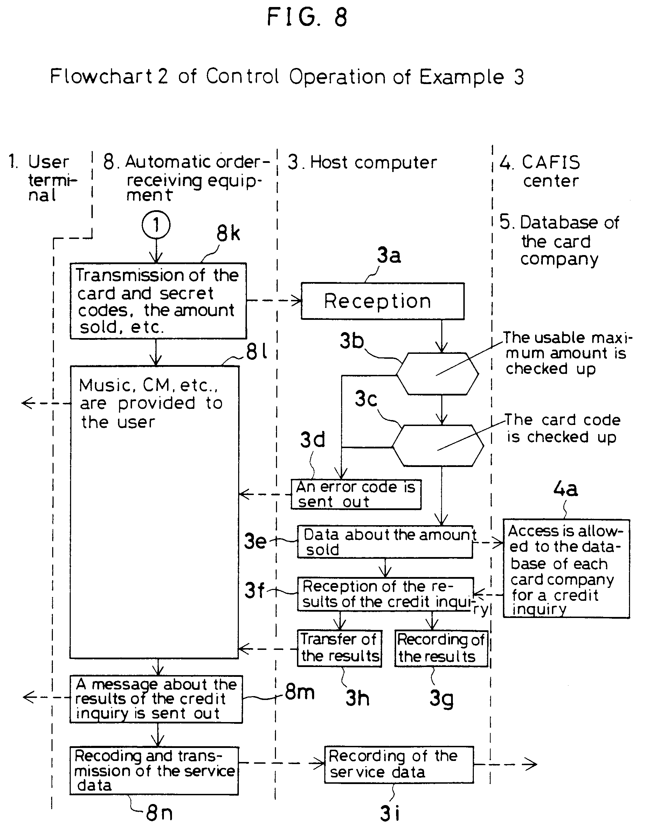

FIGS. 7 and 8 are control operation flowcharts 1 and 2 of Example 3 according to the invention. Example 3 corresponds to the third basic embodiment of the invention shown in FIG. 3, and is provided to achieve a service information providing system for mail-order sale.

In FIG. 7, as the number of the automatic order-receiving unit 8 is dialed at the user terminal 1 so as to receive mail-order service while making use of a telephone circuit (FIG. 7-1a), this number is received by the unit 8 (FIG. 7-8a), which in turn gives out an introducing message (FIG. 7-8b). When the system is the membership system, the member enters the member number (for mail-order sale) from the user terminal 1 into the unit 8 (FIG. 7-1b) on request (FIG. 7-8c).

Upon receipt of this number, the automatic order-receiving unit 8 retrieves the database in which information about membership is stored (FIG. 7-8d), thereby checking whether or not the said member is enrolled. In some cases, this database may be provided in the host computer of a male-order firm or the host computer 3, rather than in the automatic order-receiving unit 8. When the database is incorporated in somewhere other than the order-receiving unit, whether or not the member is enrolled may be checked via an additional line. If the member is confirmed to be enrolled, the order-receiving unit 8 sends out a message that asks the member to enter thereinto the code, etc., of the item the member wishes to purchase (FIG. 7-8e).

When the system is not the membership system, the user is asked to enter therein her or his address, name, etc., rather than being asked to enter thereinto her or his member number (FIG. 7-8c). The order-receiving unit records a voice input from the user in a not-shown recorder, and then asks the user to input therein the code, etc., of the item.

As the user inputs the code, amount, color code, size code, etc., of the item the user wishes to purchase from the user terminal 1 into the order-receiving unit 8, such data are stored in a not-shown memory built in the order-receiving unit 8. At this time, the order-receiving unit 8 is previously furnished with data about unit costs corresponding to item codes, so that the total amount of the ordered item can immediately be found on the basis of the item code, amount, size, etc., of the ordered item for storage in the memory.

Subsequently, the automatic order-receiving unit 8 sends out a message that asks the user to input the credit card code into it (FIG. 7-8f). As the user inputs the card code from the user terminal 1 into the unit 8 in response to this message (FIG. 7-1d), the card code is checked up in terms of the number of figures, etc. (FIGS. 7-8g and 7-8h). If there is no fault, the unit sends out a message that asks the user to input the secret code into it (FIG. 7-8i).

As the user enters the secret code from the user terminal 1 into the order-receiving unit 8 in response to this message (FIG. 7-1e), the order-receiving unit 8 checks up the number of figures of that code (FIG. 7-8j). If there is no fault, the order-receiving unit 8 transmits the card code and secret codes, the amount sold, etc., to the host computer 3, as can be seen from FIG. 8 (FIG. 8-8k). Following this, the order-receiving unit 8 sends music, CM, etc., to the user terminal by way of diversion (FIG. 8-8l).

Upon receipt of such data (FIG. 8-3a), the host computer 3 checks up the maximum amount the user can use on the basis the card and secret codes (FIG. 8-3b), and checks up the card code for the verification of the user (FIG. 8-3c). If there is no fault, an order including various information about the item ordered (e.g., item code, amount, color, size, and the amount sold) is transmitted together with the card and secret codes, etc., of the user from the host computer 3 to the database 5 of the card company via the CAFIS center 4 (FIG. 8-3e).

In response to this, the CAFIS center 4 accesses the database 5 of each card company for the purpose of a credit inquiry (FIG. 8-4a). Upon receipt of the results of the credit inquiry (FIG. 8-3f), the host computer 3 records them (FIG. 8-3g), and then transfers them to the automatic order-receiving unit 8 (FIG. 8-3h). It is here noted that when the user is not enrolled, the user may record her or his address, name, etc., in the system by way of voices, while a person in charge of the system may enter these data into the database.

Upon receipt of the results of the inquiry, the automatic order-receiving unit 8 stops providing music, etc., and instead messages them to the user terminal 1 (FIG. 8-8m). In this case, if those results have no fault (payment on credit is admitted), the unit 8 sends out a message to the effect that the item ordered can be sold on credit, and if they have some fault (payment on credit is not admitted), it sends out a message to the effect that the item ordered cannot be sold on credit.

Following this, the service data (all data about the mail-order sale) are recorded and then transmitted to the host computer 3 (FIG. 8-8n). The host computer 3 records those data in its own memory (FIG. 8-3i), and then transmits them to the card company via the CAFIS center 4.

Here it is understood that the service data recorded in the automatic order-receiving unit 8 or the host computer 3 are transmitted to a section or firm that delivers the ordered item to the user via a circuit, so that the period from ordering to the delivery of the ordered item can be reduced.

In the embodiments shown in FIGS. 7 and 8, the automatic order-receiving unit 8 is accessible to the database 5 of the card company via the host computer 3 and CAFIS center 4. However, it is noted that the automatic order-receiving unit and the host computer 3 may be constructed in the form of a single integral unit. It is also understood that the automatic order-receiving unit 8 may be designed to communicate directly, or not via the CAFIS center 4, with the card company via a circuit.

### INDUSTRIAL APPLICABILITY

Any person having a credit card can use every telephone from general, public, automotive and mobile telephones to facsimiles and modems to gain access to the first and second embodiments of the present system for providing information on credit while making use of a telephone circuit, so that she or her can receive the desired service about English conversation and seeking employment as well as marriage, legal, taxation business and management counseling, regardless of time and place.

Moreover, the service charge (fee) can be paid on credit, and improper use and abuse of the system can be ruled out so as to enable the information to be correctly used.

According to the first embodiment of the invention, the user can be verified with the card by making use of the time during which the menu guidance about serviceable information is presented to the user. In this case, the information can be smoothly, or without any substantial time lag, presented to the user, so that the user can receive good-enough service.

According to the second embodiment of the invention in which the credit inquirer is incorporated, it is possible to use existing information providing unit (that is connected to a public or other circuit to provide information), which has no communication program for the host computer.

In the first, second or third embodiment of the invention, communications between the units for providing information, addressing a credit inquiry and giving an order automatically and the host computer can be performed via a private line, packet communications network or other circuit, whereby the units mentioned above can be distributed in various districts, so that effective service can be provided over a wide (nationwide) area.

In addition, it is possible to increase the degree of freedom of providing the necessary service information by separating the information providing device from the credit inquirer unit.

Moreover, it is possible to use an existing information providing device (that is connected to a public or other circuit for providing information), which has no communication program for the host computer by making use of the second embodiment with a built-in credit inquirer.

The third embodiment of the invention enables a credit card holder to give an order for the desired item via a telephone circuit and pay payment on credit card, thereby achieving some considerable reduction in the time taken by the user. Additionally, it is possible to reduce the period from ordering to the obtaining of the ordered item.

## Claims

1. A system for providing information on credit while making use of a telephone circuit, comprising:
an information providing unit connected to said telephone circuit, which detects a signal from a user terminal to send out guidance, and receives card and secret codes from the user terminal to transfer those codes to a host computer that manages a service charge,
said host computer using information stored in a memory about a user for each transferred code to check up service conditions including the verification of the user, so that when the conditions are satisfied, said host computer transfer said card and secret codes to a card company for credit and other inquiries, and said host computer receiving the results of the credit inquiry from said card company to transmit them to said information providing unit,
said information providing unit receiving said results of the credit inquiry to message them to said user terminal and, when said results of the credit inquiry have no fault, starting to provide service information to said user terminal, and
after the completion of the provision of service information, said information providing unit transmitting service data to said host computer and said card company.

2. The system according to Claim 1, wherein:
said information providing unit receives said card and secret codes and thereupon sends out menu guidance for information that can be provided to said user terminal, and
said information providing unit receives a signal for the selection of information from said user terminal to check up said results of the credit inquiry and, when said results of the credit inquiry have no fault, starts providing the selected service information.

3. The system according to Claim 1, wherein:
said host computer transfers the card and secret codes sent out of said information providing unit to said card company with no verification of the user by said card and secret codes, where a credit inquiry including the verification of the user is carried out.

4. The system according to Claim 1, wherein:
said host computer transmits the card and secret codes sent out of said information providing unit to said card company with no verification of the user by said card and secret codes, where the verification of the user and a credit inquiry are carried out, and
said host computer receives the results of said verification of the user and said credit inquiry, and then transmits said results to said information providing unit.

5. A system for providing service on credit while making use of a telephone circuit, comprising:
a credit inquirer unit connected to said telephone circuit,
said credit inquirer unit including a switch that changes a user terminal over to an information providing unit that provides service information or a mechanism that transfers and connects a user terminal to an information providing unit via a line,
said credit inquirer unit sending out guidance upon detection of a signal from said user terminal, and receiving card and secret codes from said user terminal and thereupon transferring said codes to a host computer that manages a service charge,
said host computer checking up service conditions for each transferred code and, when said conditions are satisfied, transferring said card code, etc., to a card company for the purpose of credit and other inquiries, and said host computer receiving the results of the credit inquiry and then transferring them to an information providing unit,
said information providing unit changing over or transferring said user terminal to said information providing unit for connection thereto, when said results of the credit inquiry have no fault, thereby initiating the provision of service information to said user terminal, and
after the completion of the provision of service information, said information providing unit transmitting service data to said host computer and said card company.

6. The system according to Claim 5, wherein:
said information providing unit sends out menu guidance after connected to said user terminal and, upon receipt of an information selecting signal from said user terminal, starts providing the selected service information.

7. A system for providing mail-order service on credit while making use of a telephone circuit, comprising:
an automatic order-receiving unit connected to said telephone circuit,
said order-receiving unit sending out guidance upon detection of a signal from a user terminal, said guidance asking a user to input the code of the item to be ordered, and card and secret codes thereinto,
said order-receiving unit checking up the number of figures of said codes upon receipt of said codes and, when there is no fault, transferring each of said codes to a host computer,
said host computer checking up each transferred code for the verification of the user and other purposes and, when there is no fault, transferring said codes for credit and other inquiries from said card company, and receiving the results of the credit inquiry and transmitting them to said automatic order-receiving unit, and
said automatic order-receiving unit receiving said results of the credit inquiry and thereupon sending out the corresponding message to said user terminal, and recording service data and then transmitting them to said host computer and said card company.

8. The system according to Claim 7, wherein:
said automatic order-receiving unit sends out guidance that asks a member to input the member number thereinto upon detection of a signal from said user terminal, and checks whether or not the member is enrolled by reference to a database upon receipt of the member number from said user terminal, and when the member is confirmed to be enrolled, said automatic order-receiving unit asks the member to input thereinto the code of the item to be ordered with the card and secret codes.
